# EUROPEAN PATENT SPECIFICATION

(11) **EP 3 257 708 B1**
(45) Date of publication and mention of the grant of the patent: **18.03.2020**
(21) Application number: 15881901.1
(22) Date of filing: 25.12.2015
(51) Int. Cl.: B60R 1/00, B60R 11/02, G09G 5/00, G09G 5/36, H04N 7/18

(54) **DISPLAY CONTROL DEVICE AND DISPLAY SYSTEM**
ANZEIGESTEUERUNGSVORRICHTUNG UND ANZEIGESYSTEM
DISPOSITIF DE COMMANDE D'AFFICHAGE ET SYSTÈME D'AFFICHAGE

(30) Priority: 10.02.2015 JP 2015024393
(43) Date of publication of application: 20.12.2017
(73) Proprietor: JVC Kenwood Corporation, Yokohama-shi, Kanagawa 221-0022 (JP)
(72) Inventor: KIMURA, Tomoko, Yokohama-shi Kanagawa 221-0022 (JP)
(74) Representative: Glawe, Delfs, Moll
(86) International application number: PCT/JP2015/006472
(87) International publication number: WO 2016/129025

(56) References cited:
- EP-A1- 1 718 062
- EP-A1- 2 228 259
- EP-A1- 2 687 408
- JP-A- 2003 244 692
- JP-A- 2009 100 180
- US-A1- 2011 184 610
- US-A1- 2011 234 799

## Description

### Technical Field

The present disclosure relates to a display control device and a display system, and in particular to a display control device and a display system that display a video image taken by a camera on a display.

### Background Art

A vehicle surroundings monitoring system in which a camera attached to a vehicle takes a video image of an area surrounding the vehicle and the taken video image is displayed on a display in order to draw the attention of a driver driving the vehicle has been under development.

For example, Patent Literature 1 discloses a vehicle surroundings monitoring system capable of allowing a driver to easily recognize a series of moving states of a vehicle that is trying to pass his/her own vehicle from behind. In the technique disclosed in Patent Literature 1, a video image of an area surrounding the vehicle is taken by using a camera attached to the vehicle and this taken video image is displayed on a display disposed inside the vehicle.

### Citation List

### Patent Literature

Patent Literature 1: Japanese Unexamined Patent Application Publication No. 2010-64646 Further relevant prior art is disclosed in US2011/0234799 and in EP 1 718 062 A1.

### Summary of Invention

Since a display system, in which a video image of an area surrounding a vehicle is taken by using a camera and this taken video image is displayed on a display disposed inside the vehicle, can reduce (or eliminate) an area that cannot be viewed by the driver (i.e., a blind spot), it is effective as a system for improving the safety of the vehicle.

In such a display system, it is necessary to adjust the direction in which the camera performs shooting so that a video image required by the driver is displayed on the display. For example, the driver needs to adjust the direction in which the camera performs shooting and thereby adjust the direction of the video image displayed on the display before driving the vehicle. However, as the adjustment of the direction of the video image displayed on the display becomes complicated, there is a problem that it takes a long time to adjust the direction of the video image.

In view of the above-described problem, an object of the present disclosure is to provide a display device and a display system capable of easily changing the direction of a video image displayed on a display.

Accordingly, this embodiment provides a display device according to claim 1. Further, this embodiment provides a display system according to claim 12.

According to this embodiment, it is possible to provide a display device and a display system capable of easily changing the direction of a video image displayed on a display.

### Brief Description of Drawings

Fig. 1 is a block diagram showing a display system including a display control device according to a first embodiment;
Fig. 2 is a perspective view showing an example of a display device;
Fig. 3 is a cross section taken along a cutting line III-III in Fig. 2;
Fig. 4 is a cross section taken along a cutting line IV-IV in Fig. 2;
Fig. 5 is a perspective view showing another configuration example of a display device;
Fig. 6 is a cross section taken along a cutting line VI-VI in Fig. 5;
Fig. 7 is a cross section taken along a cutting line VII-VII in Fig. 5; Fig. 8 shows an example of an arrangement of display devices;
Fig. 9 shows an example of an arrangement of cameras;
Fig. 10 is a diagram for explaining an operation of the display control device according to the first embodiment;
Fig. 11 is a block diagram showing a display system including a display control device according to a second embodiment;
Fig. 12 is a top view showing an example of an arrangement of cameras;
Fig. 13 is a diagram for explaining an operation of the display control device according to the second embodiment; and
Fig. 14 is a cross section showing another configuration example of a display device.

### Description of Embodiments

### <First Embodiment>

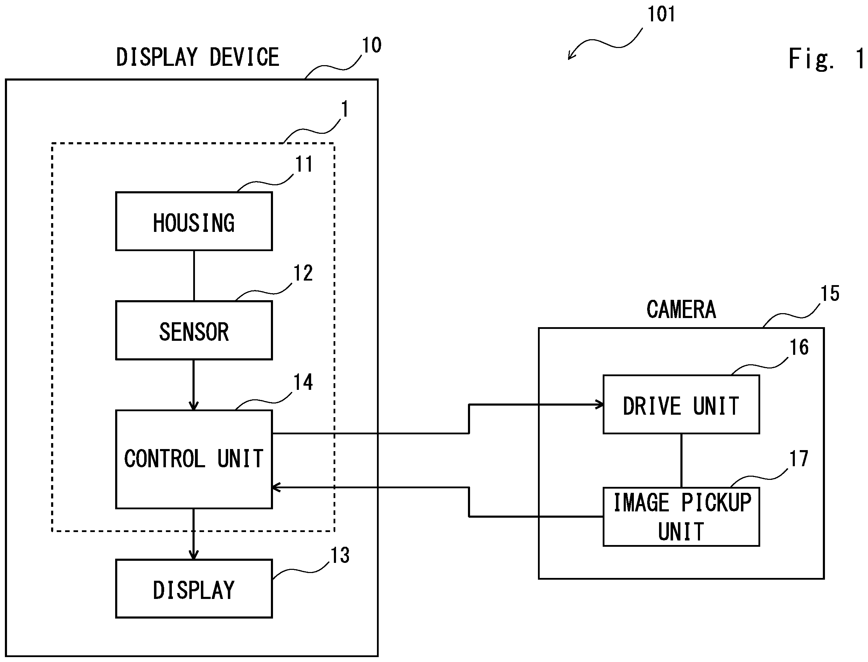

Embodiments according to the present disclosure are explained hereinafter with reference to the drawings. Fig. 1 is a block diagram showing a display system 101 including a display control device 1 according to a first embodiment. As shown in Fig. 1, the display system 101 includes a display device 10 and a camera 15. The display device 10 includes a housing 11, a sensor 12, a display 13, and a control unit 14. Note that the housing 11, the sensor 12, and the control unit 14 constitute the display control device 1. The camera 15 includes a drive unit 16 and an image pickup unit 17. Note that although Fig. 1 shows a configuration example in which the control unit 14 is included in the display device 10, the control unit 14 may be provided separately from the display device 10.

The housing 11, which is included in the display device 10, houses the display 13. Further, the housing 11 is configured so that it can be displaced independently of the display 13 (details of the structure are described later). The sensor 12 detects a displacement of the housing 11. Information about the displacement of the housing 11 (e.g., a direction and an amount of the displacement) detected by the sensor 12 is supplied to the control unit 14. The display 13 displays a video image taken by the camera 15.

The camera 15 takes a video image of an area where the camera 15 is disposed. Specifically, the camera 15 takes a video image by using the image pickup unit 17. Further, the drive unit 16 drives the image pickup unit 17 and changes the direction of the video image taken by the image pickup unit 17.

The control unit 14 controls a video image displayed on the display 13 so that a video image in a direction corresponding to the direction of the displacement of the housing 11 detected by the sensor 12 is displayed on the display 13. Specifically, the control unit 14 controls the drive unit 16 so that a video image in a direction corresponding to the direction of the displacement of the housing 11 detected by the sensor 12 is taken by the image pickup unit 17. The video image taken by the image pickup unit 17 is supplied to the display 13 through the control unit 14. In this way, the video image in the direction corresponding to the direction of the displacement of the housing 11 detected by the sensor 12 is displayed on the display 13.

The display control device 1 according to this embodiment can be used, for example, for a display system that takes a video image of an area surrounding a vehicle by using a camera and displays this taken video image on a display. As an example, a case in which an invention according to this embodiment is applied to a vehicle-mounted display system is explained hereinafter. However, the invention according to this embodiment can be applied to a display system or the like other than the vehicle-mounted display system.

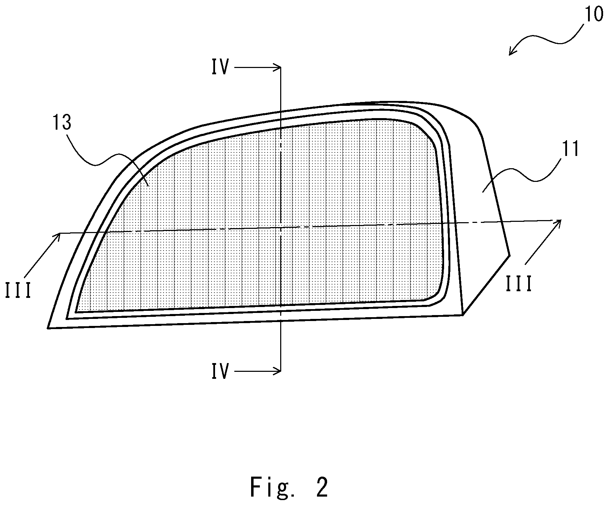

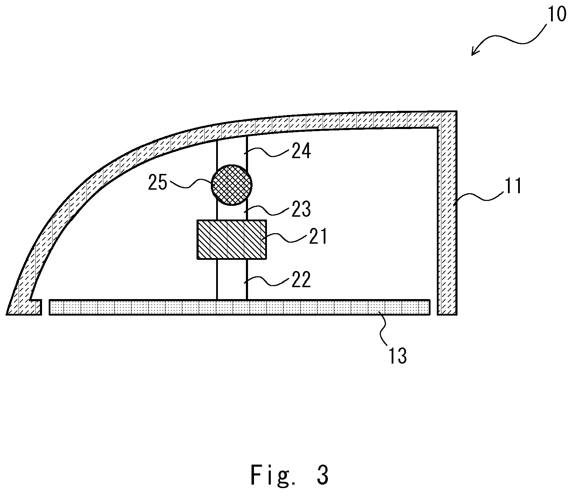

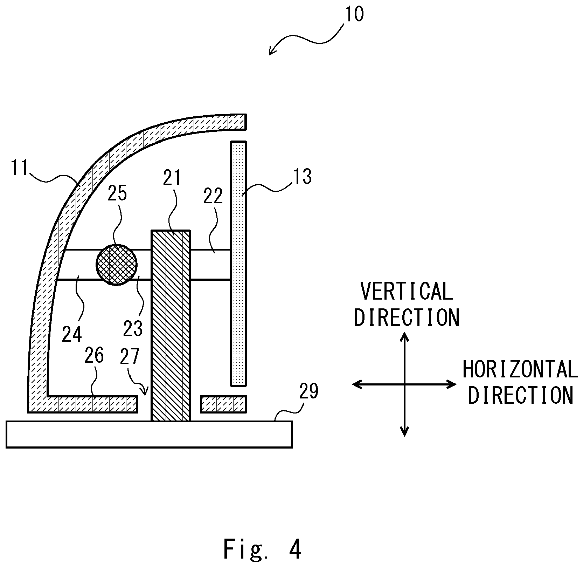

Fig. 2 is a perspective view showing an example of the display device 10, in which the display device 10 is used for the same purpose as that of a side mirror (left side) of a vehicle. Further, Fig. 3 is a cross section taken along a cutting line III-III in Fig. 2, i.e., a cross section as the display device 10 is cut on a horizontal plane. Fig. 4 is a cross section taken along a cutting line IV-IV in Fig. 2, i.e., a cross section as the display device 10 is cut on a vertical plane.

As shown in Figs. 2 to 4, the housing 11, which is included in the display device 10, houses the display 13. Specifically, the housing 11 houses the display 13 so that the periphery of the display 13 is covered by the housing 11. For the display 13, for example, a liquid crystal display device or an organic EL (Electro-Luminescence) display device can be used. Further, the housing 11 can be constructed by using a metal material or a resin material.

As shown in Figs. 3 and 4, a pillar-like member 21 extending in the vertical direction is provided inside the housing 11. The display 13 is attached to the pillar-like member 21 by using a connection member 22 that extends from the pillar-like member 21 in the horizontal direction. Note that the display 13 may be fixed to the pillar-like member 21 so that a relative positional relation between the display 13 and the pillar-like member 21 is unchanged. Further, the display 13 may be attached to the pillar-like member 21 so that the angle of the display 13 as viewed by a driver can be adjusted. The pillar-like member 21 is fixed to a base 29 (e.g., fixed to a dashboard of the vehicle).

The housing 11 is attached to the pillar-like member 21 by using connection members 23 and 24 and a rotation member 25. Specifically, the connection member 23 connects the pillar-like member 21 with the rotation member 25. The connection member 24 connects the rotation member 25 with the housing 11. The rotation member 25 connects the connection member 23 with the connection member 24 so that relative positions of the connection members 23 and 24 can be changed. By the above-described configuration, the housing 11 can be attached to the pillar-like member 21 so that relative positions of the housing 11 and the pillar-like member 21 can be changed. That is, the housing 11 can be displaced independently of the display 13. As shown in Fig. 4, a part of a bottom 26 of the housing 11 is hollowed out so that the housing 11 does not collide with the pillar-like member 21 when the housing 11 is displaced (see the number "27").

A sensor (not shown in Fig. 4) (corresponding to the sensor 12 in Fig. 1) for detecting a displacement of the housing 11 relative to the pillar-like member 21, i.e., a relative displacement between the connection members 23 and 24, is provided in the rotation member 25. For example, the sensor can be constructed by using a rotary encoder that detects a horizontal displacement of the housing 11 relative to the pillar-like member 21 and another rotary encoder that detects a vertical displacement of the housing 11 relative to the pillar-like member 21. In this way, it is possible to acquire displacement information (e.g., an amount and a direction of a displacement) of the housing 11 relative to the pillar-like member 21.

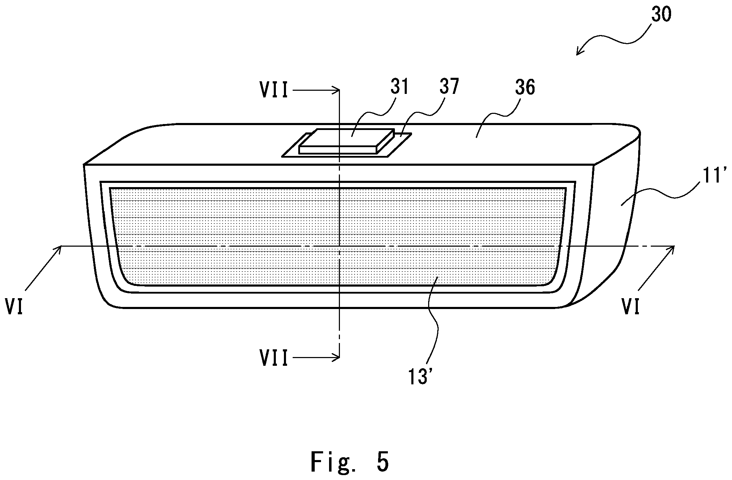

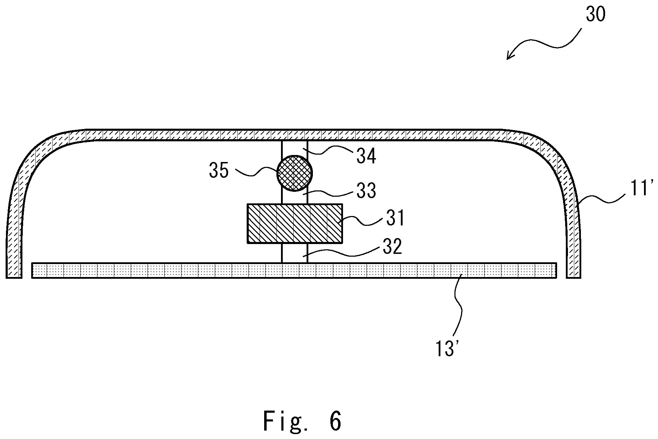

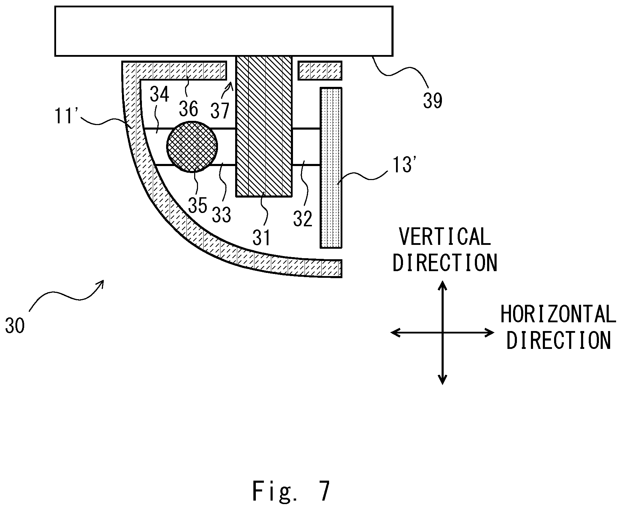

Next, as another configuration example of the display device 10 shown in Fig. 1, a display device 30 that is used for the same purpose as that of a rearview mirror of a vehicle is explained with reference to Figs. 5 to 7. Fig. 5 is a perspective view showing the display device 30. Fig. 6 is a cross section taken along a cutting line VI-VI in Fig. 5, i.e., a cross section as the display device 30 is cut on a horizontal plane. Fig. 7 is a cross section taken along a cutting line VII-VII in Fig. 5, i.e., a cross section as the display device 30 is cut on a vertical plane.

As shown in Figs. 5 to 7, the housing 11', which is included in the display device 30, houses the display 13'. Specifically, the housing 11' houses the display 13' so that the periphery of the display 13' is covered by the housing 11'. For the display 13', for example, a liquid crystal display device or an organic EL display device can be used. Further, the housing 11' can be constructed by using a metal material or a resin material.

As shown in Figs. 6 and 7, a pillar-like member 31 extending in the vertical direction is provided inside the housing 11'. The display 13' is attached to the pillar-like member 31 by using a connection member 32 that extends from the pillar-like member 31 in the horizontal direction. Note that the display 13' may be fixed to the pillar-like member 31 so that a relative positional relation between the display 13' and the pillar-like member 31 is unchanged. Further, the display 13' may be attached to the pillar-like member 31 so that the angle of the display 13' as viewed by a driver can be adjusted. The pillar-like member 31 is fixed to a base 39 (e.g., fixed to a front upper part of the vehicle).

The housing 11' is attached to the pillar-like member 31 by using connection members 33 and 34 and a rotation member 35. Specifically, the connection member 33 connects the pillar-like member 31 with the rotation member 35. The connection member 34 connects the rotation member 35 with the housing 11'. The rotation member 35 connects the connection member 33 with the connection member 34 so that relative positions of the connection members 33 and 34 can be changed. By the above-described configuration, the housing 11' can be attached to the pillar-like member 31 so that relative positions of the housing 11' and the pillar-like member 31 can be changed. That is, the housing 11' can be displaced independently of the display 13'. As shown in Fig. 7, a part of a top part 36 of the housing 11' is hollowed out so that the housing 11' does not collide with the pillar-like member 31 when the housing 11' is displaced (see the number "37").

A sensor (not shown in Fig. 6) (corresponding to the sensor 12 in Fig. 1) for detecting a displacement of the housing 11' relative to the pillar-like member 31, i.e., a relative displacement between the connection members 33 and 34, is provided in the rotation member 35. For example, the sensor can be constructed by using a rotary encoder that detects a horizontal displacement of the housing 11' relative to the pillar-like member 31 and another rotary encoder that detects a vertical displacement of the housing 11' relative to the pillar-like member 31. In this way, it is possible to acquire displacement information (e.g., an amount and a direction of a displacement) of the housing 11' relative to the pillar-like member 31.

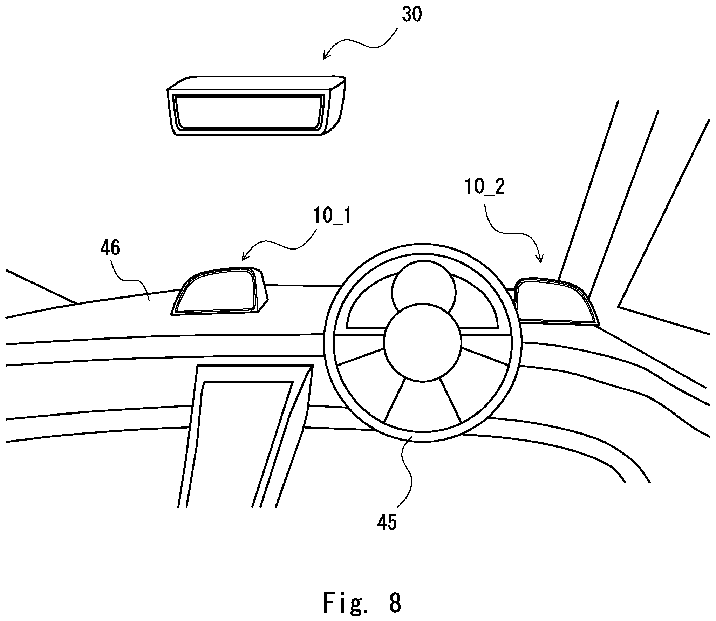

Fig. 8 shows an example of an arrangement of the display device 10 shown in Figs. 2 to 4 (in Fig. 8, left and right display devices 10_1 and 10_2 are shown) and the display device 30 shown in Figs. 5 to 7. The left display device 10_1 is disposed on a left side of a dashboard 46 as viewed in a direction toward a steering wheel 45. The right display device 10_2 is disposed on a right side of the dashboard 46 as viewed in the direction toward the steering wheel 45. The display device 30 is disposed in an upper-front part of the vehicle. Note that the example of the arrangement of the display devices 10_1, 10_2 and 30 shown in Fig. 8 is merely an example. That is, this embodiment may adopt other arrangements.

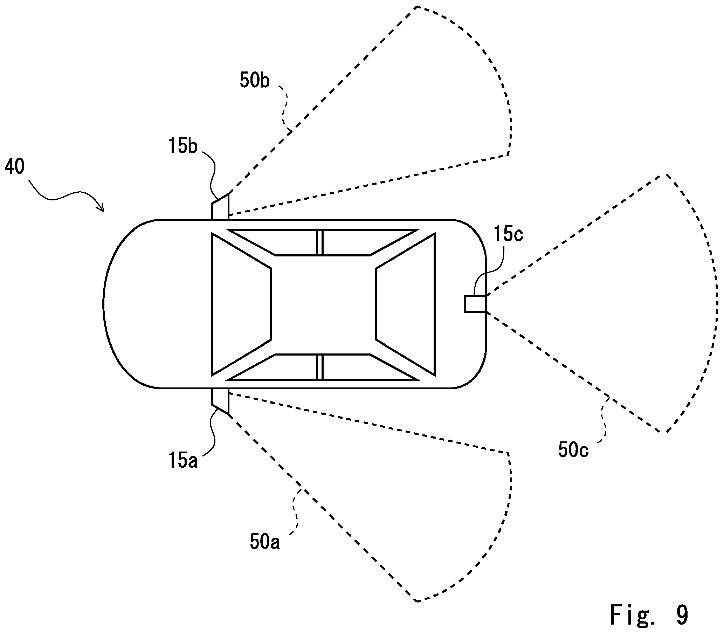

Next, an example of an arrangement of the camera 15 shown in Fig. 1 is explained. Fig. 9 is a top view showing an example of an arrangement of the camera 15. Note that although Fig. 9 shows an example in which three cameras 15a, 15b and 15c are arranged, the number of cameras is not limited to three in this embodiment. The number of display devices is also not limited to any particular number.

As shown in Fig. 9, the camera 15a is disposed in a place corresponding to a left side mirror of a vehicle 40. The camera 15a shoots, in the surrounding area of the vehicle 40, a left side of the vehicle 40 (its shooting range is indicated by a symbol "50a"). A video image taken by the camera 15a is displayed in the display device 10_1 shown in Fig. 8. Similarly, the camera 15b is disposed in a place corresponding to a right side mirror of the vehicle 40. The camera 15b shoots, in the surrounding area of the vehicle 40, a right side of the vehicle 40 (its shooting range is indicated by a symbol "50b"). A video image taken by the camera 15b is displayed in the display device 10_2 shown in Fig. 8. The camera 15c is disposed in a rear part of the vehicle 40. The camera 15c shoots, in the surrounding area of the vehicle 40, an area behind the vehicle 40 (its shooting range is indicated by a symbol "50c"). A video image taken by the camera 15c is displayed in the display device 30 shown in Fig. 8.

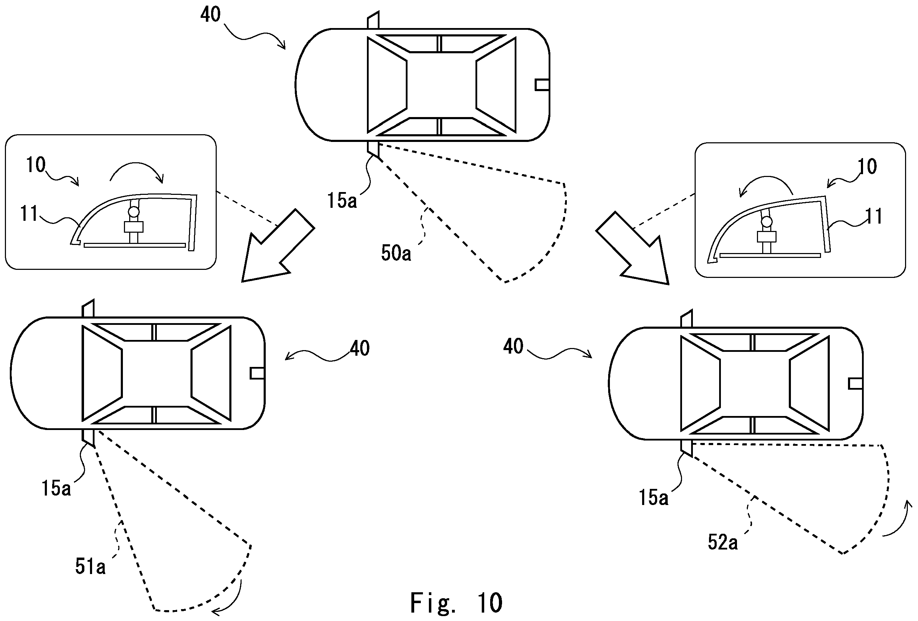

Next, an operation of the display control device 1 according to this embodiment is explained with reference to Figs. 1 and 10. An example case in which a video image taken by the camera 15a attached on the left side of the vehicle 40 is displayed in the display device 10_1 disposed inside the vehicle (see Fig. 8) is explained hereinafter.

An upper part of Fig. 10 shows a case in which the camera 15a shoots a shooting range 50a located on the left side of the vehicle 40. In this case, a video image in a direction corresponding to the shooting range 50a is displayed in the display device 10.

When the housing 11 of the display device 10 is turned in a clockwise direction as viewed from above the vehicle 40, the shooting range of the camera 15a of the vehicle 40 is changed to a shooting range 51a as shown in a lower-left part of Fig. 10. That is, the shooting range of the camera 15a is changed in a direction receding from the vehicle. Alternatively, when the housing 11 of the display device 10 is turned in a counterclockwise direction, the shooting range of the camera 15a of the vehicle 40 is changed to a shooting range 52a as shown in a lower-right part of Fig. 10. That is, the shooting range of the camera 15a is changed in a direction approaching the vehicle.

That is, when the housing 11 of the display device 10 is displaced, the sensor 12 (see Fig. 1) attached to the rotation member 25 (see Fig. 3) detects the displacement of the housing 11 and supplies information about this displacement to the control unit 14. The control unit 14 drives the image pickup unit 17 by using the drive unit 16 so that a video image in a direction corresponding to the direction of the displacement of the housing 11 detected by the sensor 12 is taken by the camera 15a. As a result, the shooting range of the camera 15a of the vehicle 40 is changed to the shooting ranges 51a and 52a, respectively. Further, the video image taken by the image pickup unit 17 is supplied to the display 13 of the display device 10_1 through the control unit 14. As a result, the video image in the direction corresponding to the direction of the displacement of the housing 11 detected by the sensor 12 is displayed on the display 13.

Note that a case in which the housing 11 is displaced in a clockwise or counterclockwise direction is explained above with reference to Fig. 10. However, in the display control device 1 according to this embodiment, when the housing 11 is moved in the vertical direction as viewed by the driver, a video image in a direction corresponding to the direction of the displacement of the housing 11 can also be displayed on the display 13 by using the above-described technique.

Further, for example, a position of the housing 11 in which it has been turned in the clockwise direction as much as possible in a plan view of the housing 11 corresponds to a position of the image pickup unit 17 in which the drive unit 16 has turned the image pickup unit 17 in the clockwise direction as much as possible in a plan view of the image pickup unit 17. That is, in this case, the shooting range 51a of the camera 15a is in an outermost position relative to the vehicle 40 (see the lower-left part of Fig. 10). Similarly, for example, a position of the housing 11 in which it has been turned in the counterclockwise direction as much as possible in the plan view of the housing 11 corresponds to a position of the image pickup unit 17 in which the drive unit 16 has turned the image pickup unit 17 in the counterclockwise direction as much as possible in the plan view of the image pickup unit 17. That is, in this case, the shooting range 52a of the camera 15a is in an innermost position relative to the vehicle 40 (see the lower-right part of Fig. 10).

Note that an operation that is performed when the housing 11 is moved in the vertical direction as viewed by the driver is similar to the above-described operation. That is, a position of the housing 11 in which it is pointed upward as much as possible, i.e., the housing 11 has been turned around the rotation member 25 in a counterclockwise direction as much as possible in Fig. 4 corresponds to a position of the image pickup unit 17 in which the drive unit 16 has turned the image pickup unit 17 upward as much as possible. That is, in this case, the shooting range of the camera 15 is in the most upward direction. Further, a position of the housing 11 in which it is pointed downward as much as possible, i.e., the housing 11 has been turned around the rotation member 25 in a clockwise direction as much as possible in Fig. 4 corresponds to a position of the image pickup unit 17 in which the drive unit 16 has turned the image pickup unit 17 downward as much as possible. That is, in this case, the shooting range of the camera 15 is in the most downward direction.

As explained above in the Background section, since the display system, in which a video image of a surrounding area of the vehicle is taken by using the camera and this video image is displayed on the display disposed inside the vehicle, can reduce (or eliminate) an area that cannot viewed by the driver (i.e., a blind spot), it is effective as a system for improving the safety of the vehicle.

In such a display system, it is necessary to adjust the direction in which the camera performs shooting so that a video image required by the driver is displayed on the display. For example, the driver needs to adjust the direction in which the camera performs shooting and thereby adjust the direction of the video image displayed on the display before driving the vehicle. However, when the adjustment of the direction of the video image displayed on the display is complicated, there is a problem that it takes a long time for the adjustment of the direction of the video image.

Therefore, in the display control device 1 according to this embodiment, the housing 11 is configured so that it can be displaced independently of the display 13 and a video image in a direction corresponding to the direction of the displacement of the housing 11 is displayed on the display 13. Therefore, the direction of a video image displayed on the display 13 can be changed just by moving the housing 11, thus making the adjustment of the direction of the video image displayed on the display 13 easier.

According to an invention in accordance with this embodiment explained above, it is possible to provide a display control device capable of easily changing the direction of a video image displayed on a display.

### <Second Embodiment>

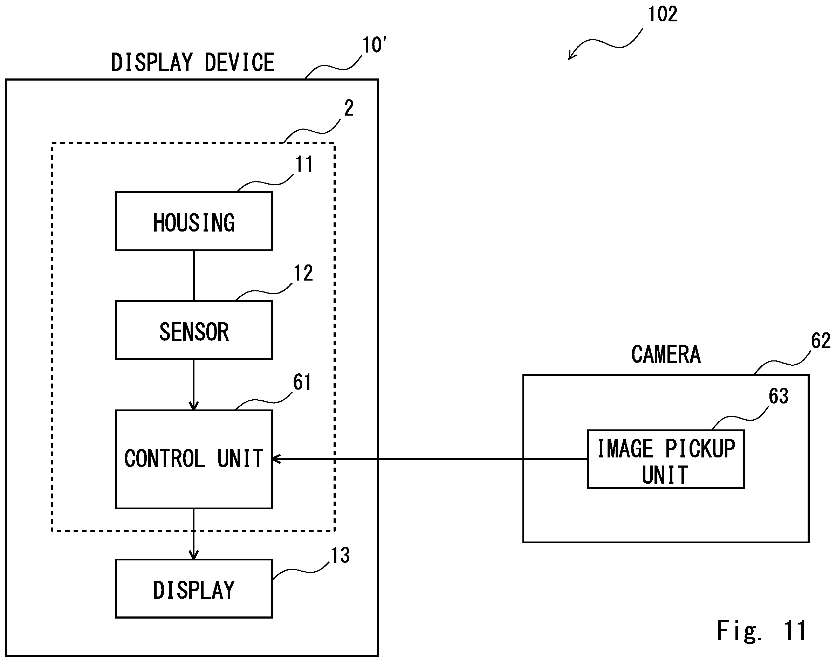

Next, a second embodiment according to the present disclosure is explained. Fig. 11 is a block diagram showing a display system 102 including a display control device 2 according to this embodiment. In the above-described first embodiment (see Fig. 1), when a video image in a direction corresponding to the direction of a displacement of the housing 11 is displayed on the display 13, the direction of the video image taken by the image pickup unit 17 is changed by driving the image pickup unit 17 by using the drive unit 16. In contrast to this, in the display control device 2 according to this embodiment, when a video image in the direction corresponding to a direction of a displacement of the housing 11 is displayed on the display 13, a cut-out place that is cut out from a video image taken by the cameral 62 is changed. Except for this difference, the display system 102 is similar to the display system 101 including the display control device 1 explained above in the first embodiment. Therefore, the same symbols are assigned to the same components and duplicated explanations are omitted.

As shown in Fig. 11, the display system 102 includes a display device 10' and a camera 62. The display device 10' incudes a housing 11, a sensor 12, a display 13, and a control unit 61. Note that the housing 11, the sensor 12, and the control unit 61 constitute the display control device 2. The camera 62 includes an image pickup unit 63. Note that although Fig. 11 shows a configuration example in which the control unit 61 is included in the display device 10', the control unit 61 may be provided separately from the display device 10'.

In this embodiment, the housing 11 is also configured so that it can be displaced independently of the display 13. The sensor 12 detects a displacement of the housing 11. Information about the displacement of the housing 11 (e.g., a direction and an amount of the displacement) detected by the sensor 12 is supplied to the control unit 61. The display 13 displays a video image taken by the camera 62.

The camera 62 shoots an area surrounding a vehicle. Specifically, the camera 62 shoots the surrounding area of the vehicle by using the image pickup unit 63 included in the camera 62. The camera 62 is fixed to a predetermined place of the vehicle and a range (i.e., an angle of view) shot by the camera 62 is fixed to a predetermined range. Therefore, in this embodiment, a camera having a wide angle of view is preferably used as the camera 62.

The control unit 61 controls a video image displayed on the display 13 so that a video image in a direction corresponding to the direction of the displacement of the housing 11 detected by the sensor 12 is displayed on the display 13. Specifically, the control unit 61 changes a cut-out place that is cut out from a video image taken by the cameral 62 so that the cut-out place corresponds to the direction of the displacement of the housing 11 detected by the sensor 12. That is, the video image taken by the image pickup unit 63 of the camera 62 is supplied to the control unit 61. The control unit 61 cuts out an area of a video image that corresponds to the direction of the displacement of the housing 11 detected by the sensor 12 from the video image supplied from the image pickup unit 63 and supplies the cut-out video image to the display 13. As a result, the video image in the direction corresponding to the direction of the displacement of the housing 11 detected by the sensor 12 is displayed on the display 13.

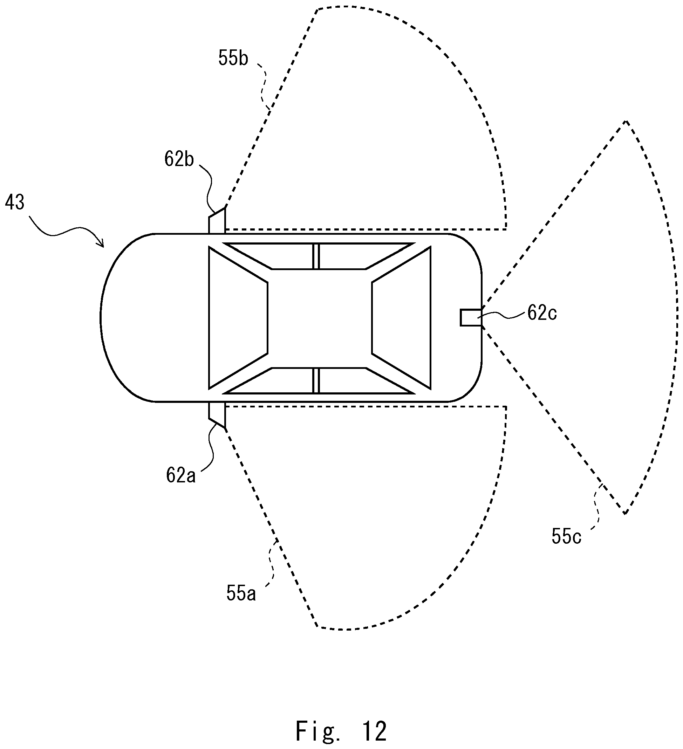

Fig. 12 is a top view showing an example of an arrangement of the camera 62. Note that although Fig. 12 shows an example in which three cameras 62a, 62b and 62c are arranged, the number of cameras is not limited to three in this embodiment. The number of display devices 10 is also not limited to any particular number.

As shown in Fig. 12, the camera 62a is disposed in a place corresponding to a left side mirror of a vehicle 43. The camera 62a shoots, in the surrounding area of the vehicle 43, a left side of the vehicle 43 (its shooting range is indicated by a symbol "55a"). A video image taken by the camera 62a is displayed in the display device 10_1 shown in Fig. 8. Similarly, the camera 62b is disposed in a place corresponding to a right side mirror of the vehicle 43. The camera 62b shoots, in the surrounding area of the vehicle 43, a right side of the vehicle 43 (its shooting range is indicated by a symbol "55b"). A video image taken by the camera 62b is displayed in the display device 10_2 shown in Fig. 8. The camera 62c is disposed in a rear part of the vehicle 43. The camera 62c shoots, in the surrounding area of the vehicle 43, an area behind the vehicle 43 (its shooting range is indicated by a symbol "55c"). A video image taken by the camera 62c is displayed in the display device 30 shown in Fig. 8.

In this embodiment, the camera 62 is fixed to the vehicle and hence the image pickup unit 63 is not displaced. Therefore, the ranges shot the cameras 62a, 62b and 62c are fixed to the shooting ranges 55a, 55b and 55c, respectively. Therefore, in this embodiment, a camera having a wide angle of view is preferably used as each of the cameras 62a, 62b and 62c. For example, the shooting ranges 55a, 55b and 55c of the cameras 62a, 62b and 62c, respectively, shown in Fig. 12 are wider than the shooting ranges 50a, 50b and 50c of the cameras 15a, 15b and 15c, respectively, shown in Fig. 9.

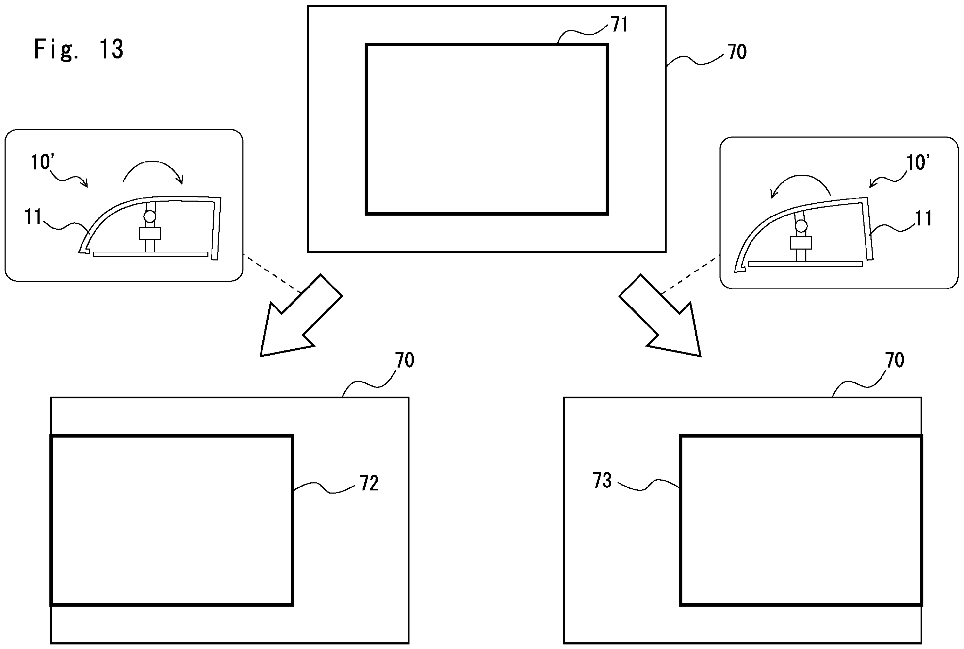

Next, an operation of the display control device 2 according to this embodiment is explained with reference to Figs. 11 to 13. An example case in which a video image taken by the camera 62a attached on the left side of the vehicle 43 (see Fig. 12) is displayed in the display device 10_1 disposed inside the vehicle (see Fig. 8) is explained hereinafter. In Fig. 13, a video image taken by the camera 62a is indicated by a number "70".

An upper part of Fig. 13 shows a case in which a central part of a video image 70 taken by the camera 62a is defined as a cut-out place 71. In this case, a video image in the cut-out place 71 is displayed in the display device 10'.

When the housing 11 of the display device 10' is turned in a clockwise direction as viewed from above the vehicle 43, the control unit 61 shifts the cut-out place in the video image 70 taken by the camera 62a to the left so that the cut-out place corresponds to the direction of the displacement of the housing 11 as shown in a lower-left part of Fig. 13. That is, the cut-out place is shifted to the side farther from the vehicle. For example, the control unit 61 defines a left part of the video image 70 taken by the camera 62a as a cut-out place 72. In this case, a video image in the cut-out place 72 is displayed in the display device 10'.

Similarly, when the housing 11 of the display device 10' is turned in a counterclockwise direction, the control unit 61 shifts the cut-out place in the video image 70 taken by the camera 62a to the right so that the cut-out place corresponds to the direction of the displacement of the housing 11 as shown in a lower-right part of Fig. 13. That is, the cut-out place is shifted to the side closer to the vehicle. For example, the control unit 61 defines a right part of the video image 70 taken by the camera 62a as a cut-out place 73. In this case, a video image in the cut-out place 73 is displayed in the display device 10'.

That is, when the housing 11 of the display device 10' is displaced, the sensor 12 (see Fig. 11) attached to the rotation member 25 (see Fig. 3) detects the displacement of the housing 11 and supplies information about this displacement to the control unit 61. The control unit 61 cuts out a video image in a direction corresponding to the direction of the displacement of the housing 11 detected by the sensor 12 and supplies the cut-out video image to the display 13. As a result, the video image in the direction corresponding to the direction of the displacement of the housing 11 detected by the sensor 12 is displayed on the display 13.

Note that a case in which the housing 11 is displaced in a clockwise or counterclockwise direction is explained above with reference to Fig. 13. However, in the display control device 2 according to this embodiment, when the housing 11 is moved in the vertical direction as viewed by the driver, a video image in a direction corresponding to the direction of the displacement of the housing 11 can also be displayed on the display 13 by using the above-described technique.

Further, for example, a position of the housing 11 in which it has been turned in the clockwise direction as much as possible in a plan view of the housing 11 corresponds a cut-out place 72 located in a left-end part of the video image 70 taken by the camera 62a (see the lower-left part of Fig. 13). Similarly, for example, a position of the housing 11 in which it has been turned in the counterclockwise direction as much as possible in the plan view of the housing 11 corresponds a cut-out place 73 located in a right-end part of the video image 70 taken by the camera 62a (see the lower-right part of Fig. 13).

Note that an operation that is performed when the housing 11 is moved in the vertical direction as viewed by the driver is similar to the above-described operation. That is, a position of the housing 11 in which it is pointed upward as much as possible, i.e., the housing 11 has been turned around the rotation member 25 in a counterclockwise direction as much as possible in Fig. 4 corresponds to a state in which an upper-end part of the video image 70 taken by the camera 62a is defined as the cut-out place. Further, a position of the housing 11 in which it is pointed downward as much as possible, i.e., the housing 11 has been turned around the rotation member 25 in a clockwise direction as much as possible in Fig. 4 corresponds to a state in which a lower-end part of the video image 70 taken by the camera 62a is defined as the cut-out place.

According to an invention in accordance with this embodiment explained above, it is possible to provide a display control device capable of easily changing the direction of a video image displayed on a display.

### <Other Embodiments>

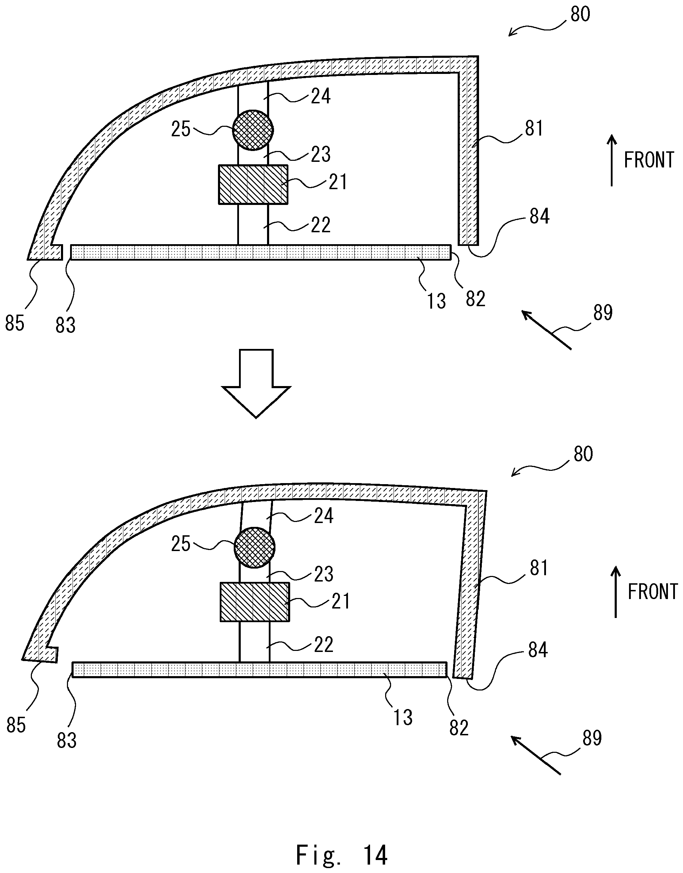

Next, other embodiments are explained. Fig. 14 is a cross section showing another configuration example of a display device. In this embodiment, as shown in an upper part of Fig. 14, when a display device 80 is constructed, it may be configured so that an end 84 of a housing 81 adjacent to an end 82 of a display 13, which is one of the ends 82 and 83 of the display 13 in the horizontal direction closer to a driver, is disposed closer to the front of the vehicle. That is, in a plan view of the housing 81, the end 84 of the housing 81 may be disposed closer to the front of the vehicle than the other end 85 of the housing 81 located farther from the driver is. Note that an arrow 89 indicates the direction of driver's line of sight.

That is, in the display device 10 shown in Fig. 3, when the housing 11 is turned in a clockwise direction, the end of the display 13 on the right side in the figure could be concealed by the end of the housing 11 on the right side in the figure. In contrast to this, in the display device 80 shown in Fig. 14, in the plan view of the housing 81, the end 84 of the housing 81 is disposed closer to the front of the vehicle. In other words, the end 84 of the housing 81 is disposed closer to the front of the vehicle than the end 82 of the display 13 is. Therefore, as shown in a lower part of Fig. 14, it is possible to prevent the end 82 of the display 13 from being concealed by the end 84 of the housing 81 when the housing 81 is turned in the clockwise direction. Note that the above-described configuration can also be applied to the display device 30 shown in Figs. 5 to 7 in a similar manner.

Further, the display control devices 1 and 2 according to the above-described embodiments may be configured so that when the vehicle is in a stopped state, the direction of a video image displayed on the display 13 can be changed to a direction corresponding to the direction of a displacement of the housing 11 detected by the sensor 12, whereas when the vehicle is traveling, such a change in the video image cannot be performed. For example, the housing may be locked to prevent the movement thereof so that the change in the video image cannot be performed. By adopting the above-described configuration, it is possible to prevent a driver from manipulating the housing 11 while he/she is driving the vehicle and thereby to improve the safety.

The present invention has been explained above with the above-described embodiments. However, the present invention is not limited to the above-described embodiments, and needless to say, various modifications, corrections, and combinations that can be made by those skilled in the art are also included in the scope of the present invention specified in the claims of the present application. The scope of the invention is solely defined by the appended claims.

This application is based upon and claims the benefit of priority from Japanese patent application No. 2015-024393 filed on February 10, 2015.

### Industrial Applicability

The present disclosure can be suitably applied to, for example, a display control device and a display system that can be mounted in a vehicle.

### Reference Signs List

- 1, 2: DISPLAY CONTROL DEVICE
- 10, 10', 30: DISPLAY DEVICE
- 11: HOUSING
- 12: SENSOR
- 13: DISPLAY
- 14, 61: CONTROL UNIT
- 15, 62: CAMERA
- 16: DRIVE UNIT
- 17, 63: IMAGE PICKUP UNIT
- 101, 102: DISPLAY SYSTEM

## Claims

1. A display device (10) comprising:
- a display panel (13, 13') configured to display a video image of a surrounding area of a vehicle taken by a camera (15, 15a, 15b, 15c) and attached to a pillar-like member (21, 31) fixed to the vehicle and to the display panel;
- a housing (11, 11') rotatably attached to the pillar-like member (21, 31) by using a rotation member (25, 35) and connection members (23, 24, 33, 34) connecting the rotation member (25, 35) with the pillar-like member (21, 31) and with the housing (11, 11') respectively, and configured to house a display panel (13, 13') so that the housing covers a periphery of the display panel (13, 13') and to be able to be displaced independently of the display panel (13, 13');
- a sensor (12) attached to the rotation member (25) configured to detect a displacement of the housing (11, 11') relative to the display panel when the housing is displaced; and
- a control unit (14) configured to perform control so that a video image shifted in a direction conforming to a direction of the displacement of the housing (11, 11') seen from the driver and detected by the sensor (12) is displayed,
- wherein
- the control unit (14) performs the control by changing a cut-out place that is cut out from a video image taken by the camera (15, 15a, 15b, 15c), and
- the cut-out place within the video image is adjusted according to the displacement of the housing (11, 11') relative to the display panel.

2. The display device according to claim 1, wherein
- the housing (11, 11') houses a display panel (13, 13') on which a video image of an area on a left side of a vehicle (40) is displayed, and
- the control unit (14) performs control so that a video image shifted in a direction receding from the vehicle (40) is displayed when the direction of the displacement of the housing (11, 11') detected by the sensor (12) is a clockwise direction as viewed above the vehicle (40).

3. The display device according to claim 1 or 2, wherein
- the housing (11, 11') houses a display panel (13, 13') on which a video image of an area on a left side of a vehicle (40) is displayed, and
- the control unit (14) performs control so that a video image shifted in a direction approaching the vehicle (40) is displayed when the direction of the displacement of the housing (11, 11') detected by the sensor (12) is a counterclockwise direction as viewed above the vehicle (40).

4. The display device according to claim 1, wherein
- the housing (11, 11') houses a display panel (13, 13') on which a video image of an area on a right side of a vehicle (40) is displayed, and
- the control unit (14) performs control so that a video image shifted in a direction receding from the vehicle (40) is displayed when the direction of the displacement of the housing (11, 11') detected by the sensor (12) is a counterclockwise direction as viewed above the vehicle (40).

5. The display device according to claim 1 or 4, wherein
- the housing (11, 11') houses a display panel (13, 13') on which a video image of an area on a right side of a vehicle (40) is displayed, and
- the control unit (14) performs control so that a video image shifted in a direction approaching the vehicle (40) is displayed when the direction of the displacement of the housing (11, 11') detected by the sensor (12) is a clockwise direction as viewed above the vehicle (40).

6. The display device according to claim 1, wherein
- the housing (11, 11') houses a display panel (13, 13') on which a video image of an area behind a vehicle (40) is displayed, and
- the control unit (14) performs control so that a video image shifted in an upward direction of the vehicle (40) is displayed when the direction of the displacement of the housing (11, 11') detected by the sensor (12) is an upward turning direction as viewed from the driver of the vehicle (40).

7. The display device according to claim 1 or 6, wherein
- the housing (11, 11') houses a display panel (13, 13') on which a video image of an area behind the vehicle is displayed, and
- the control unit (14) performs control so that a video image shifted in a downward direction of the vehicle (40) is displayed when the direction of the displacement of the housing (11, 11') detected by the sensor (12) is a downward turning direction as viewed from the driver of the vehicle (40).

8. The display device according to claim 1, wherein a position of the housing (11, 11') in which the housing (11, 11') is turned as much as possible corresponds to a cut-out place located in an end part of the video image taken by the camera (15, 15a, 15b, 15c).

9. The display device according to any one of claims 1 to 8, wherein, in a plan view of the vehicle (40), an end of the housing (11, 11') adjacent to one of ends of the display panel (13, 13') in a horizontal direction is disposed closer to a front than another end of the housing (11, 11') adjacent to another end of the display panel (13, 13') in the horizontal direction is.

10. The display device according to claim 9, wherein display panel (13, 13') displays the one of the ends is closer to the driver of the vehicle (40) than the another end is.

11. The display device according to any one of claims 1 to 10, wherein the control unit (14) performs the control when the vehicle (40) is in a stopped state.

12. A display system comprising:
- a display device (10) according to any one of claims 1 to 11; and
- the camera (15, 15a, 15b, 15c).

## Patentansprüche

1. Anzeigevorrichtung (10), umfassend:
- eine Anzeigetafel (13, 13'), die dazu eingerichtet ist, ein durch eine Kamera (15, 15a, 15b, 15c) aufgenommenes Videobild einer Umgebung eines Fahrzeugs anzuzeigen, und die an einem säulenartigen Element (21, 31) angebracht ist, das an dem Fahrzeug und an der Anzeigetafel befestigt ist;
- ein Gehäuse (11, 11'), das drehbar an dem säulenartigen Element (21, 31) unter Verwendung eines Drehelements (25, 35) und von Verbindungselementen (23, 24, 33, 34) angebracht ist, die das Drehelement (25, 35) mit dem säulenartigen Element (21, 31) bzw. mit dem Gehäuse (11, 11') verbinden, und das dazu eingerichtet ist, eine Anzeigetafel (13, 13') aufzunehmen, sodass das Gehäuse einen Umfang der Anzeigetafel (13, 13') abdeckt und unabhängig von der Anzeigetafel (13, 13') verschoben werden kann;
- einen Sensor (12), der an dem Drehelement (25) angebracht und dazu eingerichtet ist, eine Verschiebung des Gehäuses (11, 11') relativ zu der Anzeigetafel zu erfassen, wenn das Gehäuse verschoben wird; und
- eine Steuereinheit (14), die dazu eingerichtet ist, die Steuerung so durchzuführen, dass ein Videobild angezeigt wird, das in eine Richtung verschoben ist, die mit einer Richtung der Verschiebung des Gehäuses (11, 11') übereinstimmt, die vom Fahrer aus gesehen und durch den Sensor (12) erfasst wird,
- wobei
- die Steuereinheit (14) die Steuerung durch Ändern einer Ausschnittstelle durchführt, die aus einem durch die Kamera (15, 15a, 15b, 15c) aufgenommenen Videobild ausgeschnitten wird, und die Ausschnittstelle innerhalb des Videobildes entsprechend der Verschiebung des Gehäuses (11, 11') relativ zum Anzeigetafel eingestellt wird.

2. Anzeigevorrichtung nach Anspruch 1, wobei
- das Gehäuse (11, 11') eine Anzeigetafel (13, 13') aufnimmt, auf der ein Videobild eines Bereichs auf einer linken Seite eines Fahrzeugs (40) angezeigt wird, und
- die Steuereinheit (14) eine Steuerung so durchführt, dass ein Videobild, das in eine von dem Fahrzeug (40) zurückweichende Richtung verschoben ist, angezeigt wird, wenn die durch den Sensor (12) erfasste Richtung der Verschiebung des Gehäuses (11, 11') bei Ansicht von oberhalb des Fahrzeugs (40) eine Richtung im Uhrzeigersinn ist.

3. Anzeigevorrichtung nach Anspruch 1 oder 2, wobei
- das Gehäuse (11, 11') eine Anzeigetafel (13, 13') aufnimmt, auf der ein Videobild eines Bereichs auf einer linken Seite eines Fahrzeugs (40) angezeigt wird, und
- die Steuereinheit (14) eine Steuerung so ausführt, dass ein Videobild, das in eine Richtung auf das Fahrzeug (40) zu verschoben ist, angezeigt wird, wenn die durch den Sensor (12) erfasste Richtung der Verschiebung des Gehäuses (11, 11') bei Ansicht von oberhalb des Fahrzeugs (40) eine Richtung entgegen dem Uhrzeigersinn ist.

4. Anzeigevorrichtung nach Anspruch 1, wobei
- das Gehäuse (11, 11') eine Anzeigetafel (13, 13') aufnimmt, auf der ein Videobild eines Bereichs auf einer rechten Seite eines Fahrzeugs (40) angezeigt wird, und
- die Steuereinheit (14) eine Steuerung so durchführt, dass ein Videobild, das in eine von dem Fahrzeug (40) zurückweichende Richtung verschoben ist, angezeigt wird, wenn die durch den Sensor (12) erfasste Richtung der Verschiebung des Gehäuses (11, 11') bei Ansicht von oberhalb des Fahrzeugs (40) eine Richtung entgegen dem Uhrzeigersinn ist.

5. Anzeigevorrichtung nach Anspruch 1 oder 4, wobei
- das Gehäuse (11, 11') eine Anzeigetafel (13, 13') aufnimmt, auf der ein Videobild eines Bereichs auf einer rechten Seite eines Fahrzeugs (40) angezeigt wird, und
- die Steuereinheit (14) eine Steuerung so ausführt, dass ein Videobild, das in eine Richtung auf das Fahrzeug (40) zu verschoben ist, angezeigt wird, wenn die durch den Sensor (12) erfasste Richtung der Verschiebung des Gehäuses (11, 11') bei Ansicht von oberhalb des Fahrzeugs (40) eine Richtung im Uhrzeigersinn ist.

6. Anzeigevorrichtung nach Anspruch 1, wobei
- das Gehäuse (11, 11') eine Anzeigetafel (13, 13') aufnimmt, auf der ein Videobild eines Bereichs hinter einem Fahrzeug (40) angezeigt wird, und
- die Steuereinheit (14) eine Steuerung so durchführt, dass ein in eine Aufwärtsrichtung des Fahrzeugs (40) verschobenes Videobild angezeigt wird, wenn die Richtung der durch den Sensor (12) erfassten Verschiebung des Gehäuses (11, 11') eine vom Fahrer des Fahrzeugs (40) aus gesehene Aufwärtsdrehrichtung ist.

7. Anzeigevorrichtung nach Anspruch 1 oder 6, wobei
- das Gehäuse (11, 11') eine Anzeigetafel (13, 13') aufnimmt, auf der ein Videobild eines Bereichs hinter dem Fahrzeug angezeigt wird, und
- die Steuereinheit (14) eine Steuerung so durchführt, dass ein in eine Abwärtsrichtung des Fahrzeugs (40) verschobenes Videobild angezeigt wird, wenn die Richtung der durch den Sensor (12) erfassten Verschiebung des Gehäuses (11, 11') eine vom Fahrer des Fahrzeugs (40) aus gesehene Abwärtsdrehrichtung ist.

8. Anzeigevorrichtung nach Anspruch 1, wobei eine Position des Gehäuses (11, 11'), in der das Gehäuse (11, 11') so weit wie möglich gedreht ist, einer Ausschnittstelle entspricht, die sich in einem Endteil des durch die Kamera aufgenommenen Videobildes (15, 15a, 15b, 15c) befindet.

9. Anzeigevorrichtung nach einem der Ansprüche 1 bis 8, wobei in einer Draufsicht auf das Fahrzeug (40) ein Ende des Gehäuses (11, 11'), das in horizontaler Richtung an eines der Enden der Anzeigetafel (13, 13') angrenzt, näher an einer Vorderseite als ein anderes Ende des Gehäuses (11, 11'), das in horizontaler Richtung an ein anderes Ende der Anzeigetafel (13, 13') angrenzt, angeordnet ist.

10. Anzeigevorrichtung nach Anspruch 9, wobei die Anzeigetafel (13, 13') anzeigt, dass das eine Ende näher am Fahrer des Fahrzeugs (40) als das andere Ende ist.

11. Anzeigevorrichtung nach einem der Ansprüche 1 bis 10, wobei die Steuereinheit (14) die Steuerung durchführt, wenn sich das Fahrzeug (40) in einem angehaltenen Zustand befindet.

12. Anzeigesystem, umfassend:
- ein Anzeigegerät (10) nach einem der Ansprüche 1 bis 11; und
- die Kamera (15, 15a, 15b, 15c).

## Revendications

1. Dispositif d'affichage (10) comprenant :
- un panneau d'affichage (13, 13') configuré de façon à afficher une image vidéo d'une zone environnante d'un véhicule prise par une caméra (15, 15a, 15b, 15c) et attaché à un élément en forme de montant (21, 31) fixé au véhicule et au panneau d'affichage ;
- un boîtier (11, 11') attaché de manière rotative à l'élément en forme de montant (21, 31) en utilisant un élément de rotation (25, 35) et des éléments de raccordement (23, 24, 33, 34) raccordant l'élément de rotation (25, 35) à l'élément en forme de montant (21, 31) et au boîtier (11, 11') respectivement, et configuré de façon à loger un panneau d'affichage (13, 13') de manière à ce que le boîtier couvre une périphérie du panneau d'affichage (13, 13') et de façon à pouvoir être déplacé indépendamment du panneau d'affichage (13, 13') ;
- un capteur (12) attaché à l'élément de rotation (25), configuré de façon à détecter un déplacement du boîtier (11, 11') par rapport au panneau d'affichage lorsque le boîtier est déplacé ; et
- une unité de commande (14) configurée de façon à exécuter une commande de manière à ce qu'une image vidéo déplacée dans une direction conforme à une direction du déplacement du boîtier (11, 11') telle que vue par le conducteur et détectée par le capteur (12) soit affichée,
- dans lequel
- l'unité de commande (14) exécute la commande en changeant une place découpée qui est découpée d'une image vidéo prise par la caméra (15, 15a, 15b, 15c), et
- la place découpée à l'intérieur de l'image vidéo est ajustée en fonction du déplacement du boîtier (11, 11') par rapport au panneau d'affichage.

2. Dispositif d'affichage selon la revendication 1, dans lequel
- le boîtier (11, 11') loge un panneau d'affichage (13, 13') sur lequel une image vidéo d'une zone sur un côté gauche d'un véhicule (40) est affichée, et
- l'unité de commande (14) exécute une commande de manière à ce qu'une image vidéo déplacée dans une direction s'éloignant du véhicule (40) soit affichée lorsque la direction du déplacement du boîtier (11, 11') détectée par le capteur (12) est une direction dans le sens des aiguilles d'une montre telle qu'elle est vue au-dessus du véhicule (40).

3. Dispositif d'affichage selon la revendication 1 ou 2, dans lequel
- le boîtier (11, 11') loge un panneau d'affichage (13, 13') sur lequel une image vidéo d'une zone sur un côté gauche d'un véhicule (40) est affichée, et
- l'unité de commande (14) exécute une commande de manière à ce qu'une image vidéo déplacée dans une direction approchant du véhicule (40) soit affichée lorsque la direction du déplacement du boîtier (11, 11') détectée par le capteur (12) est une direction en sens inverse des aiguilles d'une montre telle qu'elle est vue au-dessus du véhicule (40).

4. Dispositif d'affichage selon la revendication 1, dans lequel
- le boîtier (11, 11') loge un panneau d'affichage (13, 13') sur lequel une image vidéo d'une zone sur un côté droit d'un véhicule (40) est affichée, et
- l'unité de commande (14) exécute une commande de manière à ce qu'une image vidéo déplacée dans une direction s'éloignant du véhicule (40) soit affichée lorsque la direction du déplacement du boîtier (11, 11') détectée par le capteur (12) est une direction en sens inverse des aiguilles d'une montre telle qu'elle est vue au-dessus du véhicule (40).

5. Dispositif d'affichage selon la revendication 1 ou 4, dans lequel
- le boîtier (11, 11') loge un panneau d'affichage (13, 13') sur lequel une image vidéo d'une zone sur un côté droit d'un véhicule (40) est affichée, et
- l'unité de commande (14) exécute une commande de manière à ce qu'une image vidéo déplacée dans une direction approchant du véhicule (40) soit affichée lorsque la direction du déplacement du boîtier (11, 11') détectée par le capteur (12) est une direction dans le dans le sens des aiguilles d'une montre telle qu'elle est vue au-dessus du véhicule (40).

6. Dispositif d'affichage selon la revendication 1, dans lequel
- le boîtier (11, 11') loge un panneau d'affichage (13, 13') sur lequel une image vidéo d'une zone derrière un véhicule (40) est affichée, et
- l'unité de commande (14) exécute une commande de manière à ce qu'une image vidéo déplacée dans une direction vers le haut, du véhicule (40), soit affichée lorsque la direction du déplacement du boîtier (11, 11') détectée par le capteur (12) est une direction de rotation vers le haut telle qu'elle est vue par le conducteur du véhicule (40) .

7. Dispositif d'affichage selon la revendication 1 ou 6, dans lequel
- le boîtier (11, 11') loge un panneau d'affichage (13, 13') sur lequel une image vidéo d'une zone derrière le véhicule est affichée, et
- l'unité de commande (14) exécute une commande de manière à ce qu'une image vidéo déplacée dans une direction vers le bas, du véhicule (40), soit affichée lorsque la direction du déplacement du boîtier (11, 11') détectée par le capteur (12) est une direction de rotation vers le bas telle qu'elle est vue par le conducteur du véhicule (40) .

8. Dispositif d'affichage selon la revendication 1, dans lequel une position du boîtier (11, 11') dans laquelle le boîtier (11, 11') est tourné le plus possible correspond à une place découpée située dans une partie extrême de l'image vidéo prise par la caméra (15, 15a, 15b, 15c).

9. Dispositif d'affichage selon l'une quelconque des revendications 1 à 8, dans lequel, dans une vue en plan du véhicule (40), une extrémité du boîtier (11, 11') adjacente à une des extrémités du panneau d'affichage (13, 13') dans une direction horizontale est disposée plus près d'un avant qu'une autre extrémité du boîtier (11, 11') adjacente à une autre extrémité du panneau d'affichage (13, 13') dans la direction horizontale ne l'est.

10. Dispositif d'affichage selon la revendication 9, dans lequel le panneau d'affichage (13, 13') affiche celle des extrémités qui est plus près du conducteur de véhicule (40) que l'autre extrémité ne l'est.

11. Dispositif d'affichage selon l'une quelconque des revendications 1 à 10, dans lequel l'unité de commande (14) exécute la commande lorsque le véhicule (40) est dans un état arrêté.

12. Système d'affichage comprenant :
- un dispositif d'affichage (10) selon l'une quelconque des revendications 1 à 11 ; et
- la caméra (15, 15a, 15b, 15c).
